# EUROPÄISCHE PATENTANMELDUNG

(11) **EP 3 064 706 A1**
(43) Veröffentlichungstag der Anmeldung: **07.09.2016**
(21) Anmeldenummer: 15157559.4
(22) Anmeldetag: 04.03.2015
(51) Int. Cl.: F01D 5/14

(54) **Leitschaufelreihe für eine axial durchströmte Strömungsmaschine**

(71) Anmelder: Siemens Aktiengesellschaft, 80333 München (DE)
(72) Erfinder: Starke, Christoph, 10557 Berlin (DE)

(57) **Zusammenfassung**

Eine Leitschaufelreihe (1) für eine axial durchströmte Strömungsmaschine (100), umfassend eine Mehrzahl n von sternförmig in n-zähliger Radiärsymmetrie angeordneten Leitschaufeln (2), wobei die radial äußeren Enden der Leitschaufeln (2) durch eine ringförmige radiale äußere Endfläche (6) und/oder die radial inneren Enden der Leitschaufeln (2) durch eine ringförmige radiale innere Endfläche (6) verbunden sind, soll einen noch höheren Wirkungsgrad der Strömungsmaschine bei besonders geringer thermischer Belastung erlauben. Dazu weist eine den Leitschaufeln (2) zugewandte Oberfläche (12) einer Endfläche (6) eine m-zählige Radiärsymmetrie auf, wobei m < n ist.

## Beschreibung

Die Erfindung betrifft eine Leitschaufelreihe für eine axial durchströmte Strömungsmaschine, umfassend eine Mehrzahl n von sternförmig in n-zähliger Radiärsymmetrie angeordneten Leitschaufeln, wobei die radial äußeren Enden der Leitschaufeln durch eine ringförmige radiale äußere Endfläche und/oder die radial inneren Enden der Leitschaufeln durch eine ringförmige radiale innere Endfläche verbunden sind.

Eine Strömungsmaschine oder Turbomaschine ist eine Fluidenergiemaschine, bei der die Energieübertragung zwischen Fluid und Maschine in einem offenen Raum durch eine Strömung nach den Gesetzen der Fluiddynamik über den Umweg der kinetischen Energie erfolgt. Die Energieübertragung erfolgt normalerweise mittels sternförmig angeordneten Rotorblättern, Flügeln oder Schaufeln, die derart profiliert sind, dass durch die Umströmung eine Druckdifferenz zwischen Vorder- und Rückseite entsteht (Tragflächenprofil).

Die Rotorblätter, Flügel oder Schaufeln sind Bestandteil des rotierenden Läufers oder Rotors der Strömungsmaschine. Bei axial durchströmten Strömungsmaschinen wie z. B. Gas- oder Dampfturbinen strömt das Fluid parallel zur Drehachse des Rotors. In derartigen Strömungsmaschinen sind häufig Leitschaufeln vorgesehen, die als Teil des Stators fluidströmungsseitig vor den rotierenden Laufschaufeln eingebaut sind und das Arbeitsmittel im optimalen Winkel auf die Laufschaufeln leiten. Auch die Leitschaufeln sind in der Regel sternförmig in n-zähliger Radiärsymmetrie in jeweils einer sogenannten Leitschaufelreihe angeordnet, wobei n die Anzahl der Laufschaufeln der Laufschaufelreihe ist. Unter Radiärsymmetrie wird hierbei eine Form der Symmetrie verstanden, bei der die Drehung eines Objektes (hier: der Leitschaufelreihe) um einen gewissen Winkel (hier: Winkelabstand zweier Leitschaufeln) um eine Gerade (hier: Achse der Strömungsmaschine) das Objekt wieder mit sich selbst zur Deckung bringt. Eine n-zählige Radiär- oder Drehsymmetrie liegt dabei vor, wenn eine Drehung um 360°/n das Objekt auf sich selbst abbildet.

Die Leitschaufeln einer Leitschaufelreihe werden am oberen und unteren radialen Ende durch Endwände begrenzt (Nabe und Gehäuse), die aus den Leitschaufelfüßen und ggf. Zwischenblechen bestehen. Die Umlenkung des Strömungsmediums an den Leitschaufeln und den Endwänden soll mit möglichst geringen aerodynamischen Verlusten geschehen. Außerdem ist insbesondere im Turbinenteil einer Gasturbine zu beachten, dass die thermale Belastung der Seitenwände des Strömungskanals möglichst gering ist.

Nahe den Endwänden treten durch starke Verwirbelungen der Strömung besonders hohe Strömungsverluste auf. Außerdem erhöhen die Wirbel die thermale Belastung der Seitenwände, da sie den Wärmewiderstand der Grenzschicht reduzieren. Um die Verwirbelung der Strömung und dadurch die aerodynamischen Verluste und die Wärmebelastung zu reduzieren, werden diese Endwände daher konturiert. Die Konturierung muss für die in der Schaufelpassage auftretenden Wirbel ausgelegt werden. Stand der Technik ist, diese Konturierung aufgrund der geometrischen Ähnlichkeit in einer Schaufelreihe für jede Passage zwischen zwei Leitschaufeln periodisch zu wiederholen, d. h. die den Leitschaufeln zugewandten Oberflächen der Endwände weisen die gleiche n-zählige Radiärsymmetrie auf, wie die Leitschaufeln selbst.

Davon ausgehend ist es Aufgabe der Erfindung, eine Leitschaufelreihe der eingangs genannten Art anzugeben, welche einen noch höheren Wirkungsgrad der Strömungsmaschine bei besonders geringer thermischer Belastung erlaubt.

Diese Aufgabe wird erfindungsgemäß gelöst, indem eine den Leitschaufeln zugewandte Oberfläche einer Endfläche eine m-zählige Radiärsymmetrie aufweist, wobei m < n ist.

Die Erfindung geht dabei von der Überlegung aus, dass das Wirbelsystem einer Schaufelpassage nicht nur von den umgebenden Schaufeln beeinflusst wird. Äußere Einflüsse, insbesondere stromaufwärts liegende Geometrien sorgen dafür, dass auch in einer Leitschaufelreihe sich die Wirbelsysteme von Schaufel zu Schaufel unterscheiden. Dies blieb bisher in der Auslegung unberücksichtigt. Die unterschiedlichen Wirbelsysteme in einer Schaufelreihe können nur berücksichtigt werden, indem sich die Periodizität der Endwandkonturierung über mehrere Schaufelpassagen erstreckt. Anstatt in jeder Schaufelpassage sollte sich demnach die Konturierung nur noch nach einer bestimmten Anzahl Schaufeln wiederholen (z. B. jede zweite, dritte oder im Extremfall erst nach 360°), d. h. mit anderen Worten: Die Zähligkeit der Radiärsymmetrie der Endwandkonturierung sollte nicht der Anzahl der Leitschaufeln entsprechen, sondern geringer sein, und kann im Extremfall sogar 1-zählig sein, so dass jeder Zwischenraum zwischen zwei Leitschaufeln unterschiedlich konturiert ist. Dadurch kann die Konturierung der Endwände optimal auf die unterschiedlichen Strömungsverhältnisse zwischen jeder Schaufelpassage angepasst werden und die Verwirbelungen werden minimiert.

In vorteilhafter Ausgestaltung der Leitschaufelreihe ist die Zähligkeit m der Radiärsymmetrie der Endwand ein Teiler der Zähligkeit n der Leitschaufeln. Da n/m der Periodizität der Konturierung entspricht, wird dadurch erreicht, dass sich die Periodizität entlang der Schaufelpassagen regelmäßig wiederholt. Umfasst die Leitschaufelreihe beispielsweise 30 Leitschaufeln in 30-zähliger Radiärsymmetrie und beträgt die Zähligkeit der Radiärsymmetrie der Oberfläche der Endwand 10 (ein Teiler von 30), so wiederholt sich die Endwandkonturierung alle 30/10 = 3 Schaufelpassagen. Die Symmetrien der Leitschaufelreihe (Leitschaufeln und Endwandkonturierung) sind dadurch optimal aufeinander angepasst.

Die Konturierung der Endwand ist vorteilhafterweise so ausgestaltet, dass die Oberfläche einen in axialer Richtung veränderlichen Radius aufweist. Dies ist der einfachste Fall der Endwandkonturierung, bei der der Endwandradius entlang der bezogen auf die Strömungsmaschine axialen Erstreckung der Endwand variiert.

In noch vorteilhafterer Ausgestaltung weist die Oberfläche einen in azimutaler Richtung veränderlichen Radius auf. Hierdurch ergeben sich effektivere, komplexere Konturierungen, mit denen sich die Verwirbelungen noch besser vermeiden lassen und somit noch bessere Wirkungsgrade erzielt werden können. Diese Konturierungen weisen auch in Umfangsrichtung eine Variation des Radius auf (nicht-achsensymmetrische Konturierung).

Eine axial durchströmte Strömungsmaschine umfasst vorteilhafterweise eine oben beschriebene Leitschaufelreihe.

In vorteilhafter Ausgestaltung der Strömungsmaschine weist dabei ein stromaufwärts der Leitschaufelreihe angeordneter axialer Abschnitt eine m-zählige Radiärsymmetrie auf. Mit anderen Worten: Die Periodizität der Endwandkonturierung ist auf die stromaufwärts in der Strömungsmaschine liegenden Randbedingungen angepasst. Liegt stromaufwärts der Leitschaufelreihe nämlich eine m-zählige Radiärsymmetrie vor, ist zu erwarten, dass die stromab entstehenden Verwirbelungen ebenfalls eine entsprechende Symmetrie aufweisen. Daher können diese durch eine dieser Symmetrie entsprechende Konturierung der Oberfläche der Endwände optimal vermieden werden.

Die axial durchströmte Strömungsmaschine ist vorteilhafterweise als Gasturbine ausgelegt.

Bei einer derartigen Gasturbine ergibt sich eine besonders vorteilhafte Anwendung, wenn die wie beschrieben ausgestaltete Leitschaufelreihe in der Turbine der Gasturbine angeordnet ist und der stromauf angeordnete axiale Abschnitt ein Brennkammerbereich der Gasturbine ist. Das heißt, dass in einer Gasturbine vorteilhafterweise die Endwandkonturierung der Leitschaufelreihe in der Turbine dieselbe Periodizität aufweisen sollte wie der Brennkammerbereich. Umfasst die Leitschaufelreihe beispielsweise 30 Leitschaufeln in 30-zähliger Radiärsymmetrie und umfasst der Brennkammerbereich 15 Brenner in 15-zähliger Radiärsymmetrie, so sollte die Zähligkeit der Radiärsymmetrie der Oberfläche der Endwand in der Leitschaufelreihe ebenfalls 15 betragen, so dass sich die Endwandkonturierung alle 30/15 = 2 Schaufelpassagen wiederholt.

Dies gilt vorteilhafterweise insbesondere dann, wenn die Leitschaufelreihe Teil der ersten Turbinenstufe ist, d. h. der strömungsmediumsseitig zuerst durchströmten Turbinenstufe, die der Brennkammer am nächsten liegt. Gerade hier hat die Symmetrie der Brennkammeranordnung besonders hohen Einfluss auf die Verwirbelungen in der Leitschaufelreihe.

Eine Kraftwerksanlage umfasst vorteilhafterweise eine derartig ausgestaltete axial durchströmte Strömungsmaschine.

Die mit der Erfindung erzielten Vorteile bestehen insbesondere darin, dass durch die Anpassung der Endwandsymmetrie einer Leitschaufelreihe an stromauf liegende Symmetrien anstatt der Symmetrie der Leitschaufeln der Reihe selbst eine optimalere Anpassung an die vorliegenden Strömungsverhältnisse erfolgt und somit Verwirbelungen besser vermieden werden können. Der Wirkungsgrad der Strömungsmaschine wird dadurch verbessert und die thermische Belastung der Endwände minimiert.

Ein Ausführungsbeispiel der Erfindung wird anhand von Zeichnungen näher erläutert.

Darin zeigen:
- FIG 1: eine Ansicht eines Teils einer Leitschaufelreihe einer axial durchströmten Strömungsmaschine gemäß Stand der Technik,
- FIG 2: eine Ansicht eines Teils einer Leitschaufelreihe einer axial durchströmten Strömungsmaschine mit unterschiedlicher Symmetrie von Leitschaufeln und Oberfläche der Endwände, und
- FIG 3: einen Längsschnitt durch eine Gasturbine.

Gleiche Teile sind in allen Figuren mit denselben Bezugszeichen versehen.

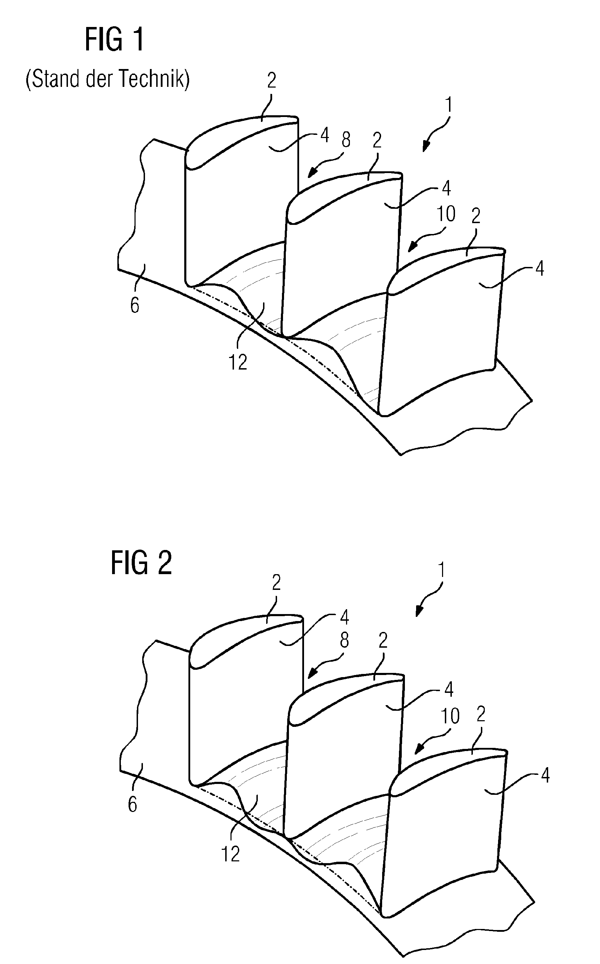

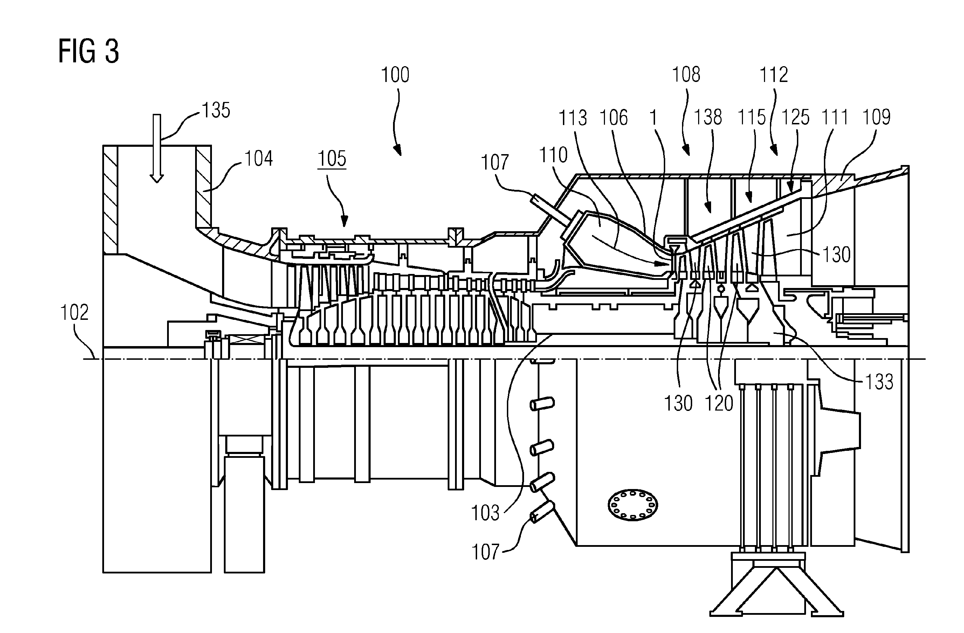

Die FIG 1 zeigt einen Teil einer Leitschaufelreihe 1, hier einen aus dem Stand der Technik bekannten Teil der Leitschaufelreihe 1 der ersten Turbinenstufe einer Gasturbine. Turbine, Gasturbine und deren grundsätzliche Funktionsweise werden in Bezug auf FIG 3 im Folgenden noch näher beschrieben.

Sofern im Folgenden die Begriffe axial, radial, azimutal o. ä. verwendet werden, bezieht sich dies stets auf die Achse der Gasturbine.

Die Leitschaufelreihe 1 umfasst eine Anzahl von im Ausführungsbeispiel 30 Leitschaufeln 2, von denen in FIG 1 nur drei gezeigt sind. Andere Anzahlen von Leitschaufeln 2 sind selbstverständlich möglich. Die Leitschaufeln 2 sind in einer 30-zähligen radiärsymmetrischen Anordnung sternförmig um die Achse der Gasturbine angeordnet. Die Leitschaufeln 2 sind dementsprechend identisch ausgebildet und sind leicht gekrümmt profiliert, ähnlich einer Flugzeugtragfläche.

Die Blätter der Leitschaufeln 2 enden jeweils auf einer radialen Seite in einem Leitschaufelfuß 4 und auf der anderen radialen Seite in einem Leitschaufelkopf. In der FIG 1 sind nur die Leitschaufelfüße 4 jeder Leitschaufel 2 gezeigt. Die Darstellung der Leitschaufeln 2 auf der anderen radialen Seite ist zu Gunsten der Übersichtlichkeit in FIG 1 abgeschnitten.

Die Leitschaufelfüße 4 sind beispielsweise durch eine Nut-Feder-Verbindung an einer ringförmigen Endfläche 6 befestigt. In der FIG 1 ist die radial innenliegende Endfläche 6 gezeigt, welche um die Nabe der Gasturbine angeordnet ist. Entsprechend sind die Leitschaufelköpfe durch eine ringförmige Endfläche mit entsprechend größerem Radius verbunden, welches Teil des Gehäuses der Gasturbine ist (in FIG 1 nicht gezeigt).

Zwischen den Leitschaufeln 2 ist jeweils eine Schaufelpassage 8, 10 gebildet, durch die das Strömungsmedium hindurch tritt. Dabei treten an der den Leitschaufeln 2 zugewandten Oberfläche 12 der Endfläche 6 Verwirbelungen auf. Diese reduzieren den Wirkungsgrad der Gasturbine.

Daher ist die Oberfläche 12 konturiert, um die Verwirbelungen zu minimieren. Die Konturierung besteht aus Variationen des Radius der Oberfläche 12 sowohl in axialer als auch in azimutaler Richtung. Im Stand der Technik gemäß FIG 1 ist die Oberfläche 12 in jeder Schaufelpassage 8, 10 identisch ausgebildet. Mit anderen Worten: Die Konturierung der Oberfläche 12 der Endfläche 6 weist dieselbe 30-zählige Radiärsymmetrie auf wie die Leitschaufeln 2.

Um die Entstehungen von Verwirbelungen noch besser zu verhindern, ist die Konturierung der Oberfläche 12 im Ausführungsbeispiel der FIG 2 geändert. Hier unterscheidet sich die Konturierung der Oberfläche 12 in der ersten Schaufelpassage 8 und der zweiten Schaufelpassage 10. Erst in den nicht gezeigten nachfolgenden Schaufelpassagen wiederholt sie sich wieder. Mit anderen Worten: Die Konturierung der Oberfläche 12 der Endfläche 6 weist eine 15-zählige Radiärsymmetrie im Unterschied zur weiterhin 30-zähligen Radiärsymmetrie der Leitschaufeln 2 auf. Dies gilt ebenso für die nicht gezeigte radial außenliegende, den Leitschaufeln 2 zugewandte Oberfläche der radial äußeren Endfläche.

Die FIG 3 zeigt eine Gasturbine 100 in einem Längsteilschnitt als Beispiel einer axial durchströmten Strömungsmaschine, in der die anhand der FIG 2 beschriebene Leitschaufelreihe 1 verbaut ist. In der Gasturbine 100 wird die innere Energie (Enthalpie) eines strömenden Fluids (Flüssigkeit oder Gas) in Rotationsenergie und letztlich in mechanische Antriebsenergie umgewandelt.

Die Gasturbine 100 weist im Inneren einen um eine Rotationsachse 102 (Axialrichtung) drehgelagerten Rotor 103 auf, der auch als Turbinenläufer bezeichnet wird. Entlang des Rotors 103 folgen aufeinander ein Ansauggehäuse 104, ein Verdichter 105, eine torusartige Brennkammer 106 mit mehreren koaxial angeordneten Brennern 107, eine Turbine 108 und das Abgasgehäuse 109.

Die Brennkammer 106 kommuniziert mit einem ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die eintrittsseitig erste Leitschaufelreihe 1 der Turbine 108, d. h. die Leitschaufelreihe 1 der ersten Turbinenstufe 112 ist gemäß der in FIG 2 dargestellten Ausführung ausgebildet.

Eine ebensolche Anordnung findet sich analog zur Turbine 108 im Verdichter. Auch hier folgen Laufschaufelreihen 125 auf Leitschaufelreihen 115.

Wie bereits in Bezug auf FIG 2 beschrieben sind die Leitschaufeln 130 dabei am Stator 143 befestigt, wohingegen die Laufschaufeln 120 einer Reihe 125 mittels einer Turbinenscheibe 133 am Rotor 103 angebracht sind. Die Laufschaufeln 120 bilden somit Bestandteile des Rotors oder Läufers 103. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120.

Dem Fluidstrom wird durch die möglichst wirbelfreie Umströmung der Turbinenschaufeln 120, 130 ein Teil seiner inneren Energie entzogen, der auf die Laufschaufeln 120 der Turbine 108 übergeht. Über diese wird dann der Rotor 103 in Drehung versetzt, wodurch zunächst der Verdichter 105 angetrieben wird. Die nutzbare Leistung wird an die nicht dargestellte Arbeitsmaschine abgegeben.

Die in Bezug auf FIG 2 beschriebene 15-zählige Symmetrie der den Leitschaufeln 2 zugewandten (d. h. den Heißgaskanal 111 begrenzenden) Oberflächen 12 der Endflächen 6 liegt in der Symmetrie der Brennkammer 106 begründet: Die Brennkammer 106 umfasst 15 Brenner 107, die in einer 15-zähligen Radiärsymmetrie angeordnet sind. Dementsprechend weisen die stromab der Brenner 107 entstehenden Verwirbelungen eine entsprechende Symmetrie auf. Die Oberflächen 12 der Leitschaufelreihe 1 der direkt an die Brennkammer 106 anschließenden ersten Turbinenstufe 112 bilden wie beschrieben diese 15-zählige Radiärsymmetrie in ihrer Konturierung ab und vermeiden die Entstehung von Verwirbelungen daher besonders gut.

## Patentansprüche

1. Leitschaufelreihe (1) für eine axial durchströmte Strömungsmaschine (100), umfassend eine Mehrzahl n von sternförmig in n-zähliger Radiärsymmetrie angeordneten Leitschaufeln (2),
wobei die radial äußeren Enden der Leitschaufeln (2) durch eine ringförmige radiale äußere Endfläche (6) und/oder die radial inneren Enden der Leitschaufeln (2) durch eine ringförmige radiale innere Endfläche (6) verbunden sind,
wobei eine den Leitschaufeln (2) zugewandte Oberfläche (12) einer Endfläche (6) eine m-zählige Radiärsymmetrie aufweist, wobei m < n ist.

2. Leitschaufelreihe (1) nach Anspruch 1,
wobei m ein Teiler von n ist.

3. Leitschaufelreihe (1) nach einem der vorhergehenden Ansprüche,
bei der die Oberfläche (12) einen in axialer Richtung veränderlichen Radius aufweist.

4. Leitschaufelreihe (1) nach einem der vorhergehenden Ansprüche,
bei der die Oberfläche (12) einen in azimutaler Richtung veränderlichen Radius aufweist.

5. Axial durchströmte Strömungsmaschine (100) mit einer Leitschaufelreihe (1) nach einem der vorhergehenden Ansprüche.

6. Axial durchströmte Strömungsmaschine (100) nach Anspruch 5,
bei der ein stromaufwärts der Leitschaufelreihe (1) angeordneter axialer Abschnitt eine m-zählige Radiärsymmetrie aufweist.

7. Axial durchströmte Strömungsmaschine (100) nach Anspruch 5 oder 6,
die als Gasturbine (100) ausgelegt ist.

8. Axial durchströmte Strömungsmaschine (100) nach Anspruch 6 und 7,
bei der die Leitschaufelreihe (1) in der Turbine (108) der Gasturbine (100) angeordnet ist und der axiale Abschnitt ein Brennkammerbereich (106) der Gasturbine (100) ist.

9. Axial durchströmte Strömungsmaschine (100) nach Anspruch 8,
bei der die Leitschaufelreihe (1) Teil der ersten Turbinenstufe (112) ist.

10. Kraftwerksanlage mit einer axial durchströmten Strömungsmaschine (100) nach einem der Ansprüche 5 bis 9.
